# EUROPEAN PATENT APPLICATION

(11) **EP 1 698 536 A1**
(43) Date of publication of application: **06.09.2006**
(21) Application number: 06251098.7
(22) Date of filing: 01.03.2006
(51) Int. Cl.: B60T 13/74, B60T 7/04, B60T 7/10

(54) **Motor vehicle electric park brake system and haptic resistance actuator for same**

(30) Priority: 01.03.2005 US 69699
(71) Applicant: Dura Global Technologies, Inc., Rochester Hills, Michigan 48309 (US)
(72) Inventor: Jez, Robert, Windsor, Ontario N9G 1V6 (CA)
(74) Representative: Johnson, Yvonne Catherine

(57) **Abstract**

A controller for a motor vehicle electric park brake comprises a park brake actuator (10) mounted for movement by human hand operation to and from a range of actuator positions between a park brake full apply position and a park brake full release position. Movement of the actuator (10) applies a corresponding range of park brake force levels from a full force level to a no force level, respectively. An electronic sensor (14) is operably associated with the park brake actuator and is operative to generate park brake actuation signals corresponding to respective actuator positions. A haptic resistance applier (16) is operatively associated with the park brake actuator and is operative to apply a range of actuator movement resistance force levels against movement of the park brake actuator by human hand operation toward the park brake full apply position. The actuator movement resistance force level applied by the haptic resistance applier (16) increases, e.g., proportionately, with distance of the park brake actuator toward the park brake full apply position.

## Description

### INTRODUCTION

The present invention is directed to electric park brake systems for motor vehicles, i.e., automobiles and trucks, and, more particularly, to electric park brake systems having improved actuators.

### BACKGROUND

It is known to equip motor vehicles such as automobiles, trucks and the like, with a park brake for static use, i.e. for use to hold the vehicle in a stationary position while parked. In certain circumstances a park brake can be applied dynamically, e.g., during vehicle travel, e.g., in an emergency situation where the primary brakes fail, as a hill-hold device to hold a vehicles position while shifting gears on a hill with a standard transmission, etc. Traditionally, a park brake actuator is mounted in the passenger compartment of the vehicle for manual operation, e.g., hand or foot operation by the vehicle's operator. The manual actuator is typically either a pull-on hand-operated lever-type handle or a push-on foot-operated lever-type pedal. In certain typical systems pulling upward on the park brake lever applies the park brake via a mechanical linkage to the brake mechanism. For example, certain known mechanical park brakes utilize a cable or other mechanical linkage to operatively connect the manual actuator in the passenger compartment to the operating components of the park brake, e.g., brake calipers, drum brake shoes or the like at the wheels, external brake bands or internal brake shoes mounted elsewhere on the drive line. Alternatively, park brake systems can use, for example, air brakes, e.g., systems utilizing an air-controlled spring system that cooperates with brake shoes at a vehicle's wheels, hydraulic brakes, e.g., systems utilizing a master brake cylinder and hydraulic fluid lines for applying hydraulic force to brake shoes at the wheels. In operating such park brakes greater pulling (or pushing) force on the lever or other actuator typically results in correspondingly greater park brake force being applied. Thus, the operator can gauge and control generally the level of applied park brake force during use of the park brake for parking or during vehicle travel.

Recently, electric park brakes have been developed and employed in motor vehicles. An electric park brake in a motor vehicle is a park brake that is controlled by an electric actuation system and may be referred to as a brake-by-wire system. The mechanical linkage between the brake-apply lever or pedal in the passenger compartment is replaced (or supplemented) by an actuator operative to cause a signal to an electric motor or other actuateable component of the park brake system to apply the park brake. For example, DE 4129919 A1 describes electric park brake systems in which electric motors are arranged on the wheel brakes and can be actuated by electric power provided in response to a corresponding signal from an actuator. Pneumatic electric park brake systems are disclosed in U.S. patent No. 6,752,472 and in U.S. Patent 6,322,161, the entire disclosures of which are incorporated by reference herein for all purposes. Also, U.S. patent No. 6,802,401, the entire disclosure of which is incorporated by reference herein for all purposes, discusses a device for controlling an electrically actuated park brake. A tip switch, slider switch or other actuator is used to apply and release the park brake, and it is suggested to provide haptic feedback about which of those conditions the parking brake is in and the nominal value of the parking brake actuating force. Such electric park brake systems mimic traditional park brakes in having an actuator mounted in the passenger compartment. The actuator, however, rather than being linked mechanically or the like to the operating components of the park brake, i.e., friction pads mounted at the road wheel(s) or other such device, the electric park brake actuator generates brake apply electric signals when moved by the vehicle operator to a brake apply position. Typically the signals are received by a microprocessor or other suitable control unit which, in response, energizes the operating components of the park brake. In certain designs, for example, the park brake operating components include one or more electric motors, each mounted at a corresponding road wheel to move friction elements into contact with a rotor, wheel drum or the like.

In many cases an electric park brake is integrated into a vehicle's driveline computer control, e.g., an anti-lock brake system, traction control system, chassis stability control system and the like, to automatically apply braking at one or of the vehicle's road wheels under certain driving conditions or situations. Also, electric park brakes have been designed to apply automatically for static braking, i.e., when the vehicle is parked or when an object is detected in the path of travel. For use in dynamic braking, i.e., while the vehicle is traveling, and in some cases for use in static braking, the user interface aspects of known actuators (alternatively referred to as driver actuators or operator actuators or the like) for electric park brakes have been found deficient. Accordingly, it is an object of this invention to provide actuators suitable for use in electric park brake systems, having good user interface characteristics. It is another object of the invention to provide electric park brake systems employing such manual actuators, e.g., mounted in the vehicle's passenger compartment. Additional objects of the invention or of at least certain exemplary embodiments of the invention will be apparent to those skilled in the art given the benefit of this disclosure.

### SUMMMARY

In accordance with a first aspect, a controller for a motor vehicle electric park brake comprises a park brake actuator mounted for movement by human hand operation to and from a range of actuator positions between a full brake apply position and a full release position. In certain exemplary embodiments the actuator is mounted in the passenger compartment of a car or truck. Movement of the actuator to positions between the full apply position and the full release position applies the park brake at a corresponding range of braking force levels between a full force level and a no force level, respectively. The controller also comprises an electronic sensor that is operably associated with the park brake actuator and is operative at least to generate park brake actuation signals corresponding to respective actuator positions. The controller also comprises a haptic resistance applier operatively associated with the park brake actuator, e.g., a component, system or device that applies resistance force against movement of the park brake actuator by hand in a direction toward the full brake apply position. That is, the haptic resistance applier is operative at least to apply a range of actuator movement resistance force levels against movement of the park brake actuator by human hand operation toward the park brake full apply position. Thus, the level of resistance force applied by the haptic resistance applier against actuator movement increases with the traveled distance of the actuator toward the park brake full apply position. In certain exemplary embodiments the resistance force increases proportionately, e.g., linearly, exponentially or at other suitable rate of increase.

Significant advantage can be achieved by the manual controllers disclosed here for a motor vehicle electric park brake, especially by well designed embodiments of such controllers. In accordance with certain exemplary embodiments, notwithstanding that the manual park brake actuator is for a "brake-by-wire" system, the brake operator, typically being the vehicle operator, is provided haptic feedback, tactile information, about the level of braking force being applied by actuation of the park brake. Preferably the resistance force applied against movement of the actuator toward the full park brake apply position mimics the resistance force levels applied against movement of a mechanical park brake lever in known mechanical park brake designs. Many experienced vehicle operators are familiar already with the general correspondence of such resistance forces to the level of braking force being applied. Consequently many such experienced vehicle operators will be readily able to understand intuitively the correspondence of the artificially generated resistance force in the controllers disclosed here to the level of braking force being applied. Thus, for example, good braking control can be achieved, especially in a dynamic braking situation where variable and less than full braking force is desired over a span of time. In certain exemplary embodiments the manual actuator for an electric part brake is provided in a motor vehicle wherein the electric park brake is integrated into the vehicle's driveline computer control, e.g., an anti-lock brake system, traction control system, chassis stability control system and the like, which is operative to automatically apply braking force using the parking brake mechanism at one or more of the vehicle's road wheels under certain driving conditions or situations. Also, at least certain embodiments of the disclosed electric park brake manual actuators with haptic feedback can be provided in a motor vehicle wherein the electric park brake is integrated into a vehicle's computer controls designed to apply the park braking mechanism automatically for static braking, i.e., when the vehicle is parked.

In accordance with another aspect, a motor vehicle electric park brake comprises a brake mechanism comprising a friction element mounted for controlled movement into and out of braking contact with a moving component associated with at least one road wheel of the motor vehicle. An electrically powered brake activating assembly comprising, e.g., a motor and clutch, is operative to apply the park brake by moving the friction element into engagement with the moving component. Suitable electrically powered brake activating assemblies will be apparent to those skilled in the art given the benefit of this disclosure, including, e.g., the assemblies disclosed in United States Patent Application Serial Number 10/881,298 filed on June 30, 2004, entitled Electronic Parking Brake Actuating Assembly, the entire disclosure of which is incorporated herein by reference for all purposes. The motor vehicle electric park brake further comprises an electronic control circuit which is operative to control the electrically powered brake activating assembly to apply a selected level of braking force in response to receipt of corresponding brake actuation signals. A park brake actuation lever is mounted for movement by human hand operation to and from a range of lever positions, either a continuous range or not, between a park brake full apply position and a park brake full release position to apply a corresponding range of park brake force levels from a full force level to a no force level, respectively. An electronic sensor is operably associated with the actuation lever and is operative to generate park brake actuation signals corresponding to the respective lever positions. A haptic feedback means is operative to provide resistance force against movement of the park brake actuation lever toward the park brake full apply position. The resistance force increases with the level of braking force applied, preferably proportionally, e.g., linearly or exponentially or the like.

Those skilled in the art will recognize that various advantages can be realized with at least certain embodiments of the motor vehicle electric park brake systems disclosed here and/or the haptic feedback controllers disclosed here for such motor vehicle electric park brake systems. At least certain embodiments of the motor vehicle electric park brake systems and the haptic feedback controllers disclosed here provide useful and advantageous user interface characteristics and function. These and other features and advantages will be better understood in view of the detailed description provided below of certain exemplary embodiments.

### BRIEF DESCRIPTION OF THE DRAWING

Certain exemplary embodiments are discussed below of a controller for a motor vehicle electric park brake in accordance with the present invention. Reference is made to the appended drawing wherein:

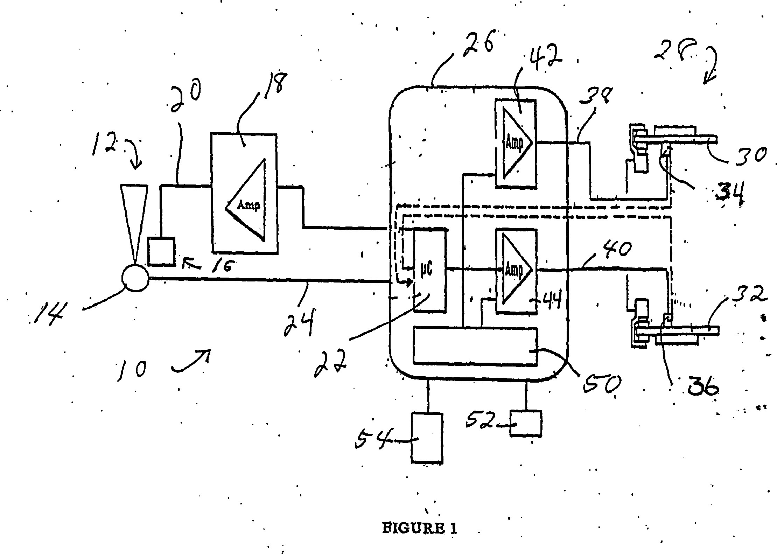

FIG. 1 is a schematic view of a motor vehicle electric park brake system comprising a proportional haptic feedback controller in accordance with an exemplary embodiment of the present disclosure.

Figure 1 is not drawn necessarily to scale and should be understood to provide a representation of certain exemplary embodiments of the invention that are illustrative of the principles involved. Some features depicted in the drawing have been enlarged or distorted relative to others to facilitate explanation and understanding. Particular configurations, dimensions, orientations and the like for any particular embodiment of a motor vehicle electric park brake system and of a proportional haptic feedback controller for such electric park brake system will typically be determined, at least in part, by the intended application and by the environment in which it is intended to be used. As used here and in the appended claims, unless otherwise clear from context, directional terms and references, such as "upper" or "downward" or the like should be understood to be relative to gravity.

### DETAILED DESCRIPTION OF CERTAIN EXEMPLARY EMBODIMENTS

In view of this disclosure, it will be understood by those who are skilled in this area of technology that the motor vehicle electric park brake systems and haptic feedback controllers disclosed and described here are suitable for use in numerous different variations in passenger vehicles, e.g., cars, trucks, etc. Typically, an electric park brake systems and haptic feedback controller in accordance with this disclosure will be designed for a particular application, e.g., to fit into a particular vehicle. For purposes of illustration, various preferred and alternative features and aspects of the invention are now described in the context of certain exemplary embodiments. It should be understood, however, that the invention is not limited to these particular embodiments.

In accordance with certain exemplary embodiments of the controllers disclosed here for motor vehicle electric park brakes, the actuator movement resistance force level applied by the haptic resistance applier is directly proportional to the position of the park brake actuator between the park brake full apply position and a park brake full release position. In accordance with certain exemplary embodiments of the controllers disclosed here for motor vehicle electric park brakes, the actuator movement resistance force level applied by the haptic resistance applier is linearly or exponentially proportional to the position of the park brake actuator between the park brake full apply position and a park brake full release position.

In accordance with certain exemplary embodiments of the controllers disclosed here for motor vehicle electric park brakes, a lock-out switch is provided, which is operative to be switched by human hand operation between a park brake enable condition and a park brake disable condition. The park brake actuator is disabled from actuating the park brake when the lock out switch is in the park brake disable condition. This optional feature my enhance vehicle safety by preventing unintended actuation of the park brake, e.g., by inadvertent movement of a brake apply lever or other such device used for the actuator. The disable switch may render the lever immobile, e.g., by mechanically locking the position of the brake in a brake position or in a brake released position, as the case may be. Alternatively, the disable switch may render movement of the lever ineffective to change the brake setting, e.g., by diverting or blocking signals from the electronic sensor operably associated with the park brake actuator. Other alternative versions of the lock-out switch will be apparent to those skilled in the art given the benefit of this disclosure.

It will be apparent to those skilled in the art given the benefit of this disclosure, that numerous alternative devices and arrangements can be employed for the manually operable actuator. In certain exemplary embodiments the actuator comprises a pivotally mounted park brake apply lever for human hand operation to and from the range of actuator positions between the park brake full apply position and the park brake full release position. Optionally the actuator further comprises a ratchet operative to releasably hold the pivotally mounted lever in any of multiple actuator positions between the park brake full apply position and the park brake full release position. Such embodiments employing a ratcheted lever advantageously mimic the operation of many mechanical park brakes, thereby rendering them intuitively familiar to a vehicle operator. In certain exemplary embodiments employing a ratcheted actuator, e.g., those employing a ratcheted lever, the controller may further comprise a release mechanism, e.g., a release button mounted on the park brake apply lever, operable by human hand, and operative to release the ratchet to permit return of the park brake apply lever toward the park brake full release position.

As described above, the haptic resistance applier of the electric park brake controllers disclosed here is operatively associated with the lever or other park brake actuator. The haptic resistance applier is operative at least to apply a range of actuator movement resistance force levels against movement of the park brake actuator by human hand operation toward the park brake full apply position. The actuator movement resistance force level applied by the haptic resistance applier increases with distance of the park brake actuator toward the park brake full apply position. It will be apparent to those skilled in the art given the benefit of this disclosure that any of a number of various different devices and techniques may be used for the haptic resistance applier. For example, the haptic resistance applier may comprise a spring, e.g., a coil spring or the like, operative to apply increasing resistance against movement of the park brake apply lever toward the park brake full apply position. The spring may be employed in compression or in tension to generate the resistance force, depending on the physical arrangement selected. The choice of spring type, strength, positioning, etc. typically will depend on the particular intended use of the controller, including, e.g., the particular vehicle in which it will be used. In certain exemplary embodiments, one leg of a coil spring is seated against a surface that moves in synchrony with the lever or other actuator and the other leg is seated against a stationary surface, e.g., a housing wall, structural member of the vehicle or the like.

In certain exemplary embodiments the haptic resistance applier may comprise an electromagnet comprising an output member operative upon energizing the electromagnet at a selected one of multiple possible power levers to apply a corresponding level of resistance against movement of the park brake apply lever toward the park brake full apply position. In other embodiments the controller may employ a haptic resistance applier comprising a pneumatic or hydraulic cylinder having an output member operative to apply resistance against movement of the park brake apply lever toward the park brake full apply position, which resistance increases with distance toward the park brake full apply position.

It will be apparent to those skilled in the art given the benefit of this disclosure, that numerous alternative devices and arrangements can be employed for the electronic sensor associated with the actuator of the controller. Exemplary sensors include Hall Effect sensors and the like. The sensor generates park brake actuation signals corresponding to the position of the actuator, i.e., the position between the full apply and full release positions. It may do so in any suitable fashion, e.g., directly or indirectly. In certain exemplary embodiments the sensor is operative to detect position indirectly by detecting movement of the park brake actuator. In other embodiments the electronic sensor is operative to detect the position of the park brake actuator directly. The park brake actuation signals generated by the sensor can be received by a suitable processor, e.g., via a Car Area Network (CAN) or other signal transmission technique. The processor may be a general purpose processor or a processor dedicated to the electric park brake system. In certain exemplary embodiments the processor is an electronic control module that also performs a number of other control functions in the vehicle, e.g., an electronic engine control module. Suitable processors, e.g., microprocessors and the like, are commercially available and will be apparent to those skilled in the art given the benefit of this disclosure.

The processor is in communication with the electronic sensor to receive the park brake actuation signals generated by the electronic sensor corresponding to the position of the park brake actuation lever between the park brake full apply position and the park brake full release position. In certain exemplary embodiments the processor, in response to receipt of such signals, generates brake mechanism control signals to energize the brake mechanism to apply a corresponding park brake force level. In embodiments of the electric park brake controller disclosed here wherein the resistance force applier is electrically controlled, optionally the same processor that receives the electronic sensor signals and responds by generating brake mechanism control signals to energize the park brake mechanism can be configured to generate control signals to energize or otherwise control the haptic feedback applier. Thus, in certain such embodiments the electronic control circuit of the controller comprises an on-board micro-processor or the like which is operative in response to signals from the electronic sensor to generate automatic brake system control signals to control movement of the friction element of the brake to apply braking force, and is further operative in response to signals from the electronic sensor to control the resistance force applier.

Referring now to Fig. 1, an electric park brake system 10 is seen to comprise a park brake actuator 12, an electric sensor 14 associated with the park brake actuator 12 and a haptic resistance applier 16 associated with the park brake actuator 12. The park brake actuator 12 is mounted for movement by human hand operation to and from a range of actuator positions between a park brake full applied position and a park brake full release position (either continuously or in a step wise fashion, e.g., with a ratchet mechanism) to apply a corresponding range of park brake force levels from a full force level to a no force level, respectively. Electric sensor 14 is operably associated with park brake actuator 12 and is operative at least to generate park brake actuation signals corresponding to the respective actuator position of the park brake actuator 12. Haptic resistance applier 16 is operatively associated with the park brake actuator and is operative at least to apply a range of actuator movement resistance force levels against movement of the park brake actuator by human hand operation toward the park brake full applied position. The actuator movement resistance force level applied by the haptic resistance applier 16 increases with distance of the park brake actuator toward the park brake full applied position. In the illustrated embodiment, haptic resistance applier 16 comprises an output member operatively linked to the park brake actuator 12 and energized or powered by power amplifier 18. Power from amplifier 18 is provided to haptic resistance applier 16 via line 20. In alternative embodiments, haptic resistance applier 16 may comprise a pneumatic or hydraulic piston operatively linked to the park brake actuator. In alternative embodiments, haptic resistance applier 16 may comprise a spring member, for example, a coil spring, leaf spring or other biasing member operative to apply increasing resistance force against movement of the park brake actuator toward the park brake full applied position. Park brake actuation signals generated by electronic sensor 14, corresponding to the sensed position of actuator 12, are passed to microprocessor or microcomputer 22 via line 24. Microprocessor 22 is part of microprocessor control unit 26 which may be located at any convenient position in the motor vehicle. Park brake actuator 12, however, typically is mounted in the passenger compartment of the vehicle for convenient hand operation by the vehicle driver.

The controller for the motor vehicle electric park brake illustrated in Fig. 1 is operatively connected to electric park brake 28 comprising wheel brakes 30 and 32, each associated with a corresponding road wheel of the motor vehicle. Electric park brake 28 further comprises electric motors 34, 36 associated with brakes 30 and 32, respectively. Electric motors 34, 36 can be actuated by actuation line 38, 40, respectively, from corresponding amplifiers 42, 44, respectively. Amplifiers 42, 44 are controlled by microprocessor 22 in response to park brake actuation signals received from electronic sensor 14. Feedback lines 46, 48 transmit signals from park brake 30 and 32, respectively. Such feedback signals may correspond to the actual position and/or the actual braking force applied by the corresponding electric park brake unit. Haptic resistance applier 16, in turn, is controlled by microprocessor 22 in response to such feedback signals. Accordingly, therefore, resistance force applied against movement of the park brake actuator 12 can be made to correspond to the position of actuator 12 and to the park brake force applied at the road wheels.

The motor vehicle electric park brake system illustrated in Fig. 1 also includes optional emergency circuit 50 operative to actuate park brakes 30, 32 with power from auxiliary battery 52, for example in the event of a failure of main battery 54. It should be recognized that all signals generated and received in the motor vehicle electric park brake system illustrated in Fig. 1 can be transmitted via a Control-Area-Network or Car-Area-Network (CAN) if the motor vehicle is equipped with a CAN. Alternatively, dedicated signal transmissions lines can be provided for some or all of the signals.

While certain particular embodiments of the invention have been illustrated and described, it will be apparent to those skilled in the art that numerous modifications and additions can be made without departing from the true spirit and scope of the invention. It is not intended that the invention be limited except in accordance with the terms of the following claims. In the following claims definite and indefinite articles such as "the," "a," "and," and the like, in keeping with traditional patent law and practice, mean "at least one." In general, unless expressly stated otherwise, all words and phrases are used above and in the following claims are intended to have all of their various different meanings, including, without limitation, any and all relevant meaning(s) given in general purpose dictionaries, and also any and all meanings given in relevant science, technology or engineering dictionaries, and also any and all meanings known in the relevant industry, technological art or the like. Thus, where a term has more than one possible meaning, all such meanings are intended to be included for that term as used here. In that regard, it should be understood that if a device, system or method has the item as called for in a claim below (i.e., it has the particular feature or element called for), and also has one or more of that general type of item but not specifically as called for in the claim, then the device, system or method in question satisfies the claim requirement. Those one or more extra items are simply ignored in determining whether the device, system or method in question satisfies the claim requirement.

## Claims

1. A controller for a motor vehicle electric park brake, comprising, in combination:
a. a park brake actuator mounted for movement by human hand operation to and from a range of actuator position between a park brake full apply position and a park brake full release position to apply a corresponding range of park brake force levels from a full force level to a no force level, respectively;
b. an electronic sensor operably associated with the park brake actuator and operative at least to generate park brake actuation signals corresponding to respective actuator positions; and
c. a haptic resistance applier operatively associated with the park brake actuator and operative at least to apply a range of actuator movement resistance force levels against movement of the park brake actuator by human hand operation toward the park brake full apply position, wherein the actuator movement resistance force level applied by the haptic resistance applier increases with distance of the park brake actuator toward the park brake full apply position.

2. The controller for a motor vehicle electric park brake of claim 1 wherein the actuator movement resistance force level applied by the haptic resistance applier is directly proportional to the position of the park brake actuator between the park brake full apply position and a park brake full release position.

3. The controller for a motor vehicle electric park brake of claim 1 or claim 2 wherein the actuator movement resistance force level applied by the haptic resistance applier is linearly proportional to the position of the park brake actuator between the park brake full apply position and a park brake full release position.

4. The controller for a motor vehicle electric park brake of anyone of claims 1 to 3 further comprising a lock-out switch operative to be switched by human hand operation between a park brake enable condition and a park brake disable condition, the park brake actuator being disabled when the lock out switch is in the park brake disable condition.

5. The controller for a motor vehicle electric park brake of any one of claims 1 to 4 wherein the park brake actuator comprises a pivotally mounted park brake apply lever for human hand operation to and from the range of actuator positions between the park brake full apply position and the park brake full release position.

6. The controller for a motor vehicle electric park brake of claim 5 wherein the park brake actuator further comprises a ratchet operative to releasably hold the pivotally mounted park brake apply lever in any of multiple actuator positions between the park brake full apply position and the park brake full release position.

7. The controller for a motor vehicle electric park brake of claim 6 further comprising a release button mounted on the park brake apply lever, operable by human hand, and operative to release the ratchet to permit return of the park brake apply lever toward the park brake full release position.

8. The controller for a motor vehicle electric park brake of claim 6 wherein the haptic resistance applier comprises a spring operative to apply increasing resistance against movement of the park brake apply lever toward the park brake full apply position.

9. The controller for a motor vehicle electric park brake of claim 8 wherein the spring is a coil spring.

10. The controller for a motor vehicle electric park brake of claim 6 wherein the haptic resistance applier comprises an electromagnet comprising an output member operative upon energizing the electromagnet at a selected power level to apply a corresponding level of resistance against movement of the park brake apply lever.

11. The controller for a motor vehicle electric park brake of claim 6 wherein the haptic resistance applier comprises a pneumatic or hydraulic cylinder comprising an output member operative to apply resistance against movement of the park brake apply lever toward the park brake full apply position, which resistance increases with distance toward the park brake full apply position.

12. The controller for a motor vehicle electric park brake of anyone of claims 1 to 11 wherein the electronic sensor is operative to detect movements of the park brake actuator.

13. The controller for a motor vehicle electric park brake of anyone of claims 1 to 12 wherein the electronic sensor is operative to detect positions of the park brake actuator.

14. A motor vehicle electric park brake, comprising, in combination:
a. a brake mechanism comprising a friction element mounted for controlled movement into and out of braking contact with a moving component associated with at least one road wheel of the motor vehicle;
b. an electrically powered brake activating assembly operative to apply the park brake by moving the friction element into engagement with the moving component;
c. an electronic control circuit operative to control the electrically powered motor to apply a selected level of braking force in response to receipt of corresponding brake actuation signals;
d. a park brake actuation lever mounted for movement by human hand operation to and from a range of lever positions between a park brake full apply position and a park brake full release position to apply a corresponding range of park brake force levels from a full force level to a no force level, respectively;
e. an electronic sensor operably associated with the park brake actuation lever and operative at least to generate park brake actuation signals corresponding to respective lever positions; and
f. proportional haptic feedback means operative to provide resistance force against movement of the park brake actuation lever toward the park brake full apply position, which resistance force increases with the level of braking force applied.

15. The motor vehicle electric park brake of claim 14 wherein the electronic control circuit comprises a microprocessor in communication with the electronic sensor to receive park brake actuation signals generated by the electronic sensor corresponding to the position of the park brake actuation lever between the park brake full apply position and the park brake full release position and the generate in response thereto
a. brake mechanism control signals to energize the brake mechanism to apply a corresponding park brake force level, and
b. haptic feedback means control signals to energize the proportional haptic feedback means to provide a corresponding level of resistance force against movement of the park brake actuation lever toward the park brake full apply position.

16. The motor vehicle electric park brake of claim 14 or claim 15 wherein the electronic control circuit is further operative to control movement of the friction element to apply braking force in response to automatic brake system control signals generated by an on-board micro-processor in response to at least one vehicle condition independent of the park brake actuation lever.

17. The motor vehicle electric park brake of any one of claims 14 to 16 wherein the electrically powered brake activating assembly comprises an electric motor and a clutch.
